# FASCICULE DE BREVET EUROPEEN

(11) **EP 2 934 249 B1**
(45) Date de publication et mention de la délivrance du brevet: **29.08.2018**
(21) Numéro de dépôt: 13815046.1
(22) Date de dépôt: 04.12.2013
(51) Int. Cl.: A47J 31/42, A47J 42/38

(54) **DISPOSITIF POUR MOUDRE ET NETTOYER UNE ZONE DE MOUTURE, MACHINE A CAFÉ ET PROCÉDÉ CORRESPONDANT**
VORRICHTUNG ZUM SCHLEIFEN UND REINIGEN EINES SCHLEIFBEREICHS, KAFFEEMASCHINE UND ENTSPRECHENDES VERFAHREN
DEVICE FOR GRINDING AND CLEANING A GRINDING AREA, COFFEE MACHINE AND CORRESPONDING METHOD

(30) Priorité: 21.12.2012 FR 1262541
(43) Date de publication de la demande: 28.10.2015
(73) Titulaire: SEB S.A., 69130 Ecully (FR)
(72) Inventeur: HUSSON, Benjamin, F-21000 Dijon (FR); MORIN, Gilles, F-21490 Varois et Chaignot (FR)
(74) Mandataire: Regimbeau
(86) Numéro de dépôt international: PCT/FR2013/052939
(87) Numéro de publication internationale: WO 2014/096605

(56) Documents cités:
- US-A- 1 789 334
- US-A- 2 517 073
- US-A- 3 812 773
- US-A- 3 967 546

## Description

### 1. Domaine de l'invention

La présente invention concerne le domaine des dispositifs à moudre des grains avant leur utilisation sous forme de mouture, et nettoyer les zones de mouture après le broyage. Les grains à moudre sont du type, café, cacao, céréales, etc. Elle vise également les machines à préparer des boissons qui sont équipées de tels dispositifs et le procédé correspondant.

### 2. Art antérieur

Il est connu dans l'art antérieur des dispositifs pour moudre et nettoyer une zone de mouture dans une machine à café. Ces dispositifs sont principalement conçus pour délivrer à partir de grains une quantité de mouture nécessaire qui sera infusée par du liquide. Un dispositif de ce genre comprend un corps comportant une chambre de broyage recevant les grains et une sortie d'évacuation de la mouture, un broyeur à meules installé dans la chambre de broyage pour moudre des grains, et un dispositif de distribution de liquide distribuant le liquide vers une chambre d'infusion.

Cependant, le problème que pose ce genre de dispositifs est que le broyage des grains charge la mouture en électricité statique. Ce phénomène induit la formation d'une pellicule de mouture à la sortie des broyeurs au niveau d'une zone de mouture qui comprend une zone de sortie, et en particulier sur les parois des meules, le conduit de transfert de la mouture, etc. Nous comprenons par zone de sortie au moins une partie du périmètre externe des meules. Les dispositifs de distribution de liquide dirigent, en général, le flux de liquide en direction de la chambre d'infusion pour infuser la mouture qui arrive dans la chambre d'infusion Le flux ne nettoie la mouture qui s'est accumulée que sur la périphérie de l'orifice distribuant le flux. De plus, la pellicule de mouture qui s'accroche aux parois des meules et dans sa périphérie n'est entrainée que lors d'un nouveau processus de broyage d'une quantité fraiche de mouture, ce qui pollue le goût et dégrade la qualité de la boisson infusée. Un tel dispositif est connu par exemple du document US 3 812 773.

### 3. Objectif de l'invention

L'invention a notamment pour objectif de pallier tout ou partie des inconvénients de l'art antérieur.

Plus précisément, un objectif de l'invention est de diminuer, voire d'éviter l'accumulation de mouture broyée et chargée en électricité statique en aval de la chambre de broyage en tombant directement dans un filtre.

Un autre objectif de l'invention est de fournir une machine à café équipée d'un dispositif pour moudre et nettoyer une zone de mouture afin d'obtenir une boisson de meilleur qualité, notamment gustativement, et en particulier pour du café.

Un autre objectif de l'invention est de proposer une solution qui soit simple et peu coûteuse.

### 4. Résumé de l'invention

Ces objectifs sont atteints grâce à un dispositif pour moudre et nettoyer une zone de mouture dans une machine à café laquelle comporte une chambre d'infusion, le dispositif étant destiné à être disposé au-dessus de la chambre d'infusion, le dispositif comprenant :
- un corps comportant une chambre de broyage recevant des grains à moudre et une sortie d'évacuation de la mouture;
- un broyeur à meules installé dans la chambre de broyage pour moudre des grains ;
- un dispositif de distribution de liquide distribuant un liquide vers la chambre d'infusion et comprenant au moins un orifice d'apport de liquide.

L'invention est remarquable en ce que l'orifice d'apport de liquide est orienté vers la sortie d'évacuation en direction d'une partie au moins d'un périmètre externe du broyeur à meules pour y distribuer un flux de liquide.

Ainsi, grâce à l'invention, la sortie d'évacuation du broyeur est nettoyée ce qui évite que la mouture chargée en électricité statique ne s'accumule à la sortie de celle-ci et n'encrasse ledit broyeur. Cela permet également lors d'une seconde utilisation des meules que la boisson obtenue ne soit pas polluée par les résidus de mouture qui viennent se mélanger à la mouture « fraiche ». On obtient alors une boisson d'une qualité gustative améliorée.

Préférentiellement, l'orifice d'apport de liquide peut être agencé sur une paroi intérieure du dispositif de distribution de liquide pour diriger un flux de liquide vers au moins une partie du périmètre externe du broyeur.

Selon une caractéristique avantageuse, on prévoit que la paroi intérieure se prolonge sensiblement verticalement vers le bas pour définir une chambre d'évacuation de mouture, et que l'orifice d'apport de liquide soit agencé pour diriger un flux de liquide vers au moins une partie de cette paroi intérieure. De la sorte, la mouture obtenue est concentrée et dirigée vers le centre de la chambre d'infusion, en particulier dans le filtre.

De manière avantageuse, on peut prévoir que le broyeur à meules comporte une meule fixe et une meule mobile, la meule mobile étant entrainée en rotation par un arbre d'entraînement selon un axe de rotation sensiblement vertical et disposée en vis-à-vis de la meule fixe, les meules mobile et fixe étant agencées pour définir entre elles un tronçon d'écoulement de la mouture. Cet agencement permet de régler la granulométrie de la mouture et de permettre l'évacuation de celle-ci hors de la chambre de broyage.

Pour permettre une bonne répartition du flux vers le périmètre externe du broyeur, le dispositif de distribution comprend une portion tubulaire qui est disposée au moins autour d'une partie du périmètre externe des meules.

Dans un même but, le dispositif de distribution de liquide peut comprendre plusieurs des orifices d'apport de liquide qui sont distribués radialement le long du périmètre de la paroi intérieure.

Selon une caractéristique importante, on prévoit que le tronçon d'écoulement de la mouture présente une sortie de mouture orientée suivant un axe qui est désaxé par rapport à l'axe que présente chaque orifice d'apport de liquide. De la sorte, le liquide réparti sur le périmètre externe des meules ne rentre pas à l'intérieur du tronçon et évite la condensation à l'intérieur des meules.

Selon un mode de réalisation préféré, la meule mobile est de forme conique ou tronconique et est installée à l'intérieur de la meule fixe. L'agencement des meules coniques ou tronconiques permet une meilleure évacuation de la mouture vers la chambre d'infusion.

Selon un autre mode de réalisation, les meules mobile et fixe peuvent être en forme de disque. Dans ce cas de figure, la mouture est projetée sur les parois de la chambre de broyage, réduisant l'accumulation de résidus sur le périmètre des meules. Dans ce présent mode de réalisation, l'orifice d'apport de liquide est situé au dessus des meules pour permettre l'écoulement du liquide le long d'un passage agencé entre le broyeur et le dispositif de distribution et pour éviter que le liquide ne pénètre à l'intérieur du tronçon d'écoulement de la mouture.

Pour réduire encore le phénomène d'électricité statique, les meules du broyeur à meules peuvent être en céramique.

L'invention concerne également une machine à café comprenant:
- une trémie ayant une ouverture de réception de grains de café et une ouverture d'évacuation des grains de café vers un dispositif à moudre et nettoyer comprenant les caractéristiques susmentionnées.
- une chambre d'infusion en communication avec la sortie d'évacuation de la mouture de café de la chambre de broyage qui reçoit la mouture et le liquide chargé en résidus de mouture, la sortie d'évacuation étant agencée au-dessus de la chambre d'infusion pour transférer la mouture directement dans la chambre d'infusion et éliminer le risque d'encrassement;

- une unité de chauffage de liquide en communication avec un réservoir pour l'alimentation en liquide du dispositif de distribution du liquide, et
- un moteur relié à un arbre d'entrainement de la meule mobile.

Selon une caractéristique particulière, l'arbre d'entraînement n'entraîne pas la chambre d'infusion. L'invention concerne également un procédé pour moudre et nettoyer une zone de mouture dans une machine. Selon le procédé :
- du café en grain est broyé dans une chambre de broyage pour obtenir une mouture ;
- la mouture de café est transférée dans une chambre d'infusion, et
- de l'eau alimentant le dispositif de distribution de liquide distribue un flux d'eau sur au moins une partie du périmètre externe des meules pour emporter des résidus de mouture.

Selon une mise en oeuvre du procédé, l'eau emportant les résidus de mouture est dirigée vers la chambre d'infusion pour y infuser la mouture.

### 5. Liste des figures

D'autres caractéristiques et avantages innovants ressortiront de la description ci-après, fournie à titre indicatif et nullement limitatif, en référence aux dessins annexés, dans lesquels :
- La figure 1 est une vue en coupe verticale d'une machine à café selon l'invention ;
- La figure 2 est une vue de détail selon la figure 1 d'un dispositif pour moudre et nettoyer une zone de mouture ;
- Les figures 3 et 8 sont des vues en coupe verticale et de détail d'un dispositif pour moudre et nettoyer;
- La figure 4 représente un deuxième mode de réalisation du dispositif pour moudre et nettoyer ;
- La figure 5 illustre un dispositif de distribution de liquide selon l'invention ;
- La figure 6 représente un autre mode de réalisation du dispositif pour moudre et nettoyer ; et,
- La figure 7 est une vue de dessous d'une partie du dispositif pour moudre et nettoyer après nettoyage.

### 6. Description détaillée

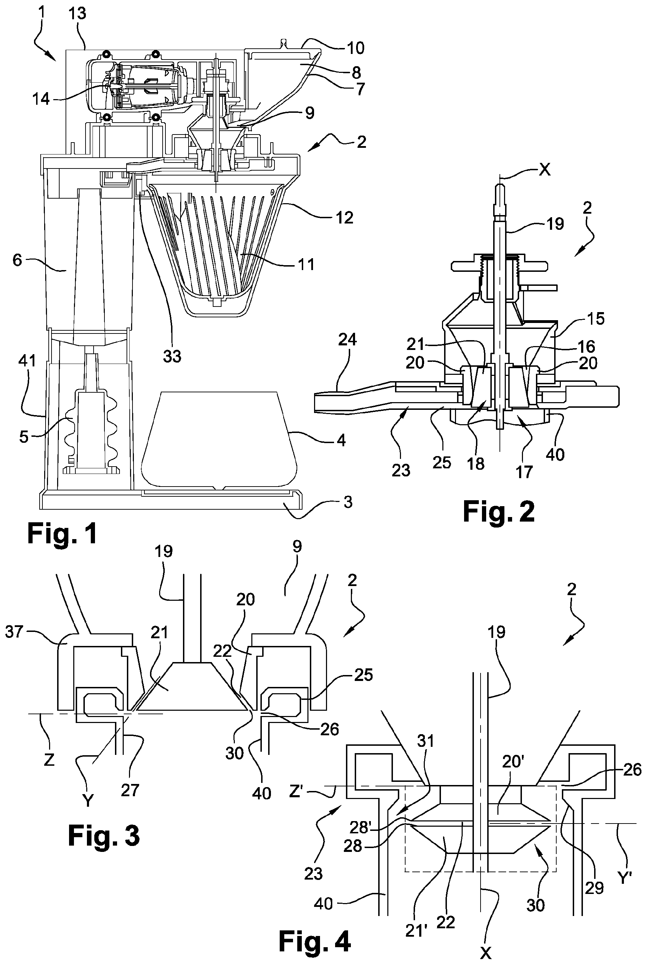

La figure 1 illustre une machine à préparer des boissons. Pour cet exemple il s'agit d'une machine à café 1 équipée d'un dispositif 2 pour moudre automatiquement des grains de café, cacao, céréales, etc. et nettoyer une zone de mouture selon l'invention. La machine à café 1 comprend un socle 3 sur lequel peut reposer une verseuse 4 adaptée à contenir la boisson infusée. Le socle 3 comprend également dans un montant vertical 41, par rapport au socle 3, une unité de chauffage 5 (thermobloc ou boiler ou élément chauffant bi-tube) de liquide en communication avec un réservoir 6 de liquide qui est supporté par le montant vertical 41. La machine à café 1 comprend une trémie 7 permettant de stocker des grains de café à moudre. La trémie 7 a une ouverture de réception 8 et une ouverture d'évacuation 9 des grains de café vers le dispositif 2 pour moudre et nettoyer qui est décrit plus loin dans la description. La trémie 7 est disposée en partie supérieure de la machine à café 1. Un couvercle 10 peut être prévu pour fermer la trémie 7.

La machine à café 1 comprend encore une chambre d'infusion 11 formée par un porte-filtre 12 qui est ouvert en partie supérieure et qui comprend une sortie pour l'infusion vers la verseuse 4. Le porte-filtre 12 est destiné à recevoir de manière connue un filtre en papier (non représenté) en forme de cône dans lequel la mouture est reçue, contenue. La machine à café peut fonctionner avec un filtre permanent et également avec des filtres plats (papier et permanent). Le porte-filtre 12 peut être monté pivotant par rapport à un support 33 de la structure de la machine 1.

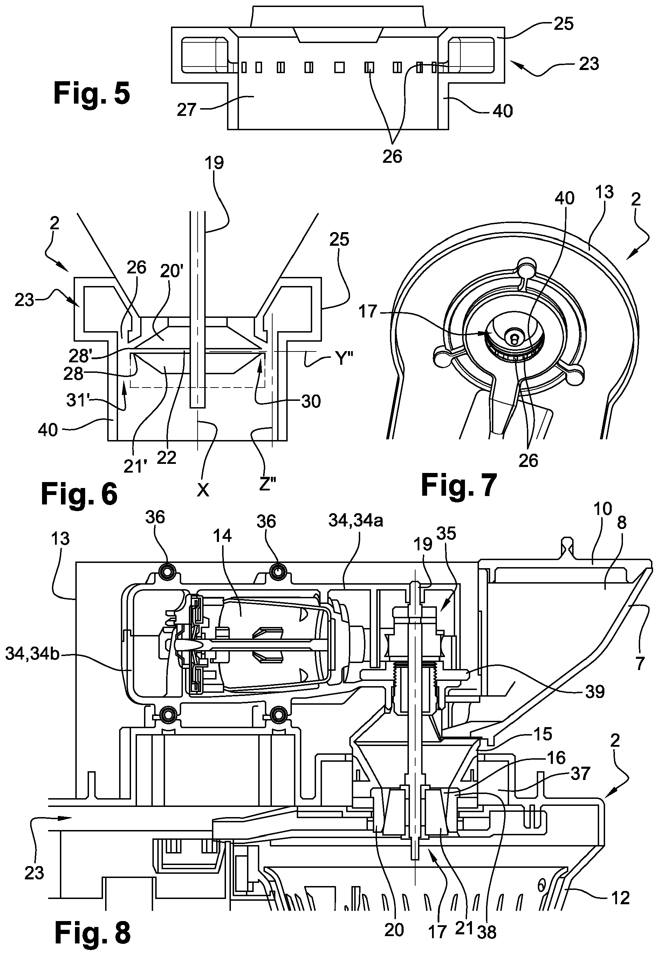

Selon les exemples illustrés sur les figures 2, 3, 4, 6 et 8, le dispositif 2 pour moudre et nettoyer est installé dans un châssis 13 fixé à la structure de la machine 1. Dans le châssis 13 est monté un moteur 14, lui-même installé dans un carter 34 constitué d'une première partie 34a supérieure et d'une deuxième partie 34b inférieure. Le moteur 14 est relié à un arbre d'entraînement 19 qui s'étend sensiblement verticalement dans le châssis 13 et qui tourne en rotation selon un axe X. Nous comprenons sur les figures 1 et 8 que l'arbre d'entraînement 19 n'entraîne pas la chambre d'infusion 11 (le porte-filtre 12). Le moteur 14 fait partie d'un groupe motoréducteur 35 et est de préférence électrique. Des joints annulaires 36, creux, sont prévus entre le châssis 13 et le carter 34 pour éviter la propagation des vibrations dans la machine pendant son fonctionnement. Les joints 36 sont avantageusement en élastomère.

Le dispositif 2 pour moudre et nettoyer comprend un corps 15 qui comporte une chambre de broyage 16 destinée à recevoir les grains à moudre issus de la trémie 7 et une sortie d'évacuation 17 de la mouture obtenue. La mouture est obtenue grâce à un broyeur à meules 18 qui est disposé dans la chambre de broyage 16 pour moudre les grains, le broyeur à meules 18 étant mû par l'arbre d'entraînement 19. Le broyeur comporte une meule fixe 20 et une meule mobile 21. Cette dernière est entrainée en rotation par l'arbre d'entrainement 19 via le moteur 14, selon l'axe de rotation X, et le groupe motoréducteur 35. La meule mobile 21 est disposée en vis-à-vis de la meule fixe 20. Les meules mobile 21 et fixe 20 sont agencées pour définir entre elles un tronçon 22 d'écoulement de la mouture. Les meules 20, 21 peuvent être en tout type de matériaux, de préférence, elles sont en céramique.

Dans le châssis 13 est en outre installé un dispositif de distribution 23 de liquide distribuant du liquide vers la chambre d'infusion 11. De préférence, le dispositif 23 de distribution de liquide est alimenté par le réservoir 6 de liquide via une pompe (non représentée). L'ensemble du châssis 13 vient coiffer la partie supérieure du réservoir 6 et du porte-filtre 12, et est fixé sur ceux-ci par tout moyen de fixation adéquat. Comme illustré aux figures 1 et 8, la sortie d'évacuation 17 est située au-dessus de la chambre d'infusion 11.

Le dispositif 23 de distribution de liquide se présente sous la forme d'un conduit 24 ou goulotte connecté au réservoir 6 et d'une portion tubulaire 25 qui est disposée de manière adjacente au broyeur 18. Le conduit 24 et la portion tubulaire 25 sont montés dans la partie inférieure du châssis 13. Le dispositif de distribution 23 comprend au moins un orifice 26 d'apport de liquide qui est orienté vers la sortie d'évacuation 17 de la chambre de broyage 16. Cet orifice 26 est placé non loin du broyeur pour qu'un flux de liquide arrive sur cette sortie d'évacuation 17 pour la nettoyer. L'orifice 26 d'apport de liquide est agencé, en particulier, sur une paroi intérieure 27 du dispositif de distribution 23 de liquide pour diriger le flux de liquide vers au moins une partie du périmètre externe (paroi) du broyeur 18. Le flux de liquide est dirigé radialement vers les meules.

Plus précisément, la portion tubulaire 25 comporte la paroi intérieure 27 qui est tournée en regard d'une portion du périmètre externe du broyeur 18. De manière préférée et comme on peut le voir en détail sur la figure 5, la paroi intérieure 27 se prolonge sensiblement verticalement, vers le bas, telle qu'une jupe ou un col 40. Ce col 40 définit une chambre d'évacuation de mouture (zone de mouture) comprenant ainsi la sortie d'évacuation, la paroi du dispositif de distribution et au moins une partie du périmètre externe des meules telle qu'illustrée sur les figures 3, 4, 6 et 8 qui sont susceptibles de recevoir de la mouture. Le col 40 est prolongé en direction de la chambre d'infusion 11 pour permettre le transfert de la mouture qui tombe par gravité depuis la sortie d'évacuation 17 vers la chambre d'infusion 11 sans rencontrer d'obstacles. On comprend ainsi que la sortie d'évacuation 17 de la mouture de café est agencée au-dessus de la chambre d'infusion 11. L'orifice 26 dirige alors le liquide vers le col 40 et la sortie d'évacuation 17. La chambre d'infusion 11 est en communication avec la sortie d'évacuation 17 de mouture de la chambre de broyage 16 qui, en situation de fonctionnement de la machine, reçoit la mouture et le liquide qui est chargé en résidus de mouture.

La portion tubulaire 25 est disposée au moins autour d'une partie du périmètre externe des meules. Dans une réalisation préférée, la portion tubulaire 25 est conformée comme une douchette et est annulaire. Elle entoure les meules mobile 20 et fixe 21 du broyeur 18. Autrement dit, les meules fixe et mobile sont installées au centre de la portion tubulaire, entre la paroi intérieure 27 de celle-ci.

Comme on peut le voir sur la figure 5, plusieurs des orifices 26 d'apport de liquide sont distribués radialement, et de manière régulière, le long du périmètre de la paroi intérieure 27.

Selon les différents exemples décrits ci-avant et ci-après, le tronçon 22 d'écoulement de la mouture présente une sortie de mouture 30 orientée suivant un axe Y qui est désaxé par rapport à un axe Z que présente chaque orifice d'apport 26 de liquide. En effet cela a pour but d'éviter que le liquide ne rentre à l'intérieur des meules 20, 21 et la formation de condensation qui pourrait favoriser l'encrassement des meules.

Sur les figures 3 et 8, on aperçoit en particulier, selon un premier mode de réalisation, que la meule mobile 21 est de forme conique ou tronconique et est installée à l'intérieur de la meule fixe, dans ce cas externe. La meule mobile, ici interne, fixée et entraînée par l'arbre d'entraînement 19, est montée coaxial avec l'axe X. La meule fixe 20 est solidarisée à un boîtier 37 et est de révolution de manière coaxiale avec l'axe X. La meule fixe 20 présente un épaulement 38 permettant une fixation au moyen d'une vis par exemple au boîtier 37. Ce dernier 37 présente une forme cylindrique et entoure la meule fixe 20. Le corps 15 du dispositif 2 pour moudre et nettoyer est également monté serré, via une pièce 39 agissant comme un écrou de manière connue, entre la meule fixe 20 et la deuxième partie inférieure 34b du carter 34. L'écrou 39 est monté sur l'arbre d'entraînement 19, lequel traverse alors le broyeur à meules 18, le corps 15 et une partie du carter 34. L'écrou 39 en coopération avec l'arbre d'entraînement 19 permet de régler, si besoin est, (la largeur du tronçon 22 d'écoulement) par un déplacement axial en hauteur, la meule fixe par rapport à la meule mobile rotative pour régler le degré de finesse de la mouture. Les meules 20, 21 sont installées de telle sorte que le tronçon 22 d'écoulement est orienté de biais et en direction de la chambre d'infusion 11. Le flux de liquide dirigé suivant l'axe Z de chaque orifice d'apport 26 de liquide est tangent avec la sortie de mouture 30 du tronçon d'écoulement se prolongeant suivant l'axe Y. De la sorte toute la partie inférieure et externe de la meule est nettoyée par le liquide devenant ainsi chargé en résidus de mouture.

Sur la figure 4 est représenté un autre mode de réalisation dans lequel le broyeur 18 comprend des meules mobile 21' et fixe 20' qui sont en forme de disque. Les meules mobiles et fixes sont montées dans le dispositif 2 selon le même principe illustré sur les figures 3 et 8. Dans ce cas de figure, la meule mobile 21' est montée en-dessous de la meule fixe 20'. Elles présentent chacune une face 28, 28' plates, en regard l'une de l'autre. Le tronçon 22 d'écoulement est formé entre les deux faces plates 28, 28' des meules. La sortie de mouture 30 est dirigée suivant l'axe Y' qui ici est transversal par rapport à l'axe X de l'arbre d'entraînement. Le ou les orifices d'apport 26 de liquide sont orientés suivant l'axe Z' disposé au-dessus de l'axe Y' et sensiblement parallèle l'un par rapport à l'autre. Plus précisément, l'orifice d'apport 26 de liquide est situé au dessus des meules pour permettre l'écoulement du liquide le long d'un passage 31 agencé entre le broyeur à meules 18 et le dispositif de distribution 23. De la sorte, une partie du périmètre externe des meules mobile 21' et fixe 20' est nettoyée par le liquide devenant ainsi chargé en résidus de mouture. La meule mobile en forme de disque est destinée à tourner via l'arbre d'entraînement 19 à haute vitesse pour projeter radialement la mouture sur la paroi intérieure 27 et le col 40 de la portion tubulaire. Un chanfrein 29 peut être réalisé en face de la sortie de mouture 30 pour favoriser le transfert de la mouture vers la chambre d'infusion 11. Cela permet d'éviter que la mouture ne remonte vers les orifices 26 d'apport de liquide.

Sur la figure 6 est illustré un autre mode de réalisation, dans lequel le broyeur comprend des meules mobile 21' et fixe 20' qui sont en forme de disque également. Les meules mobiles et fixes sont montées dans le dispositif 2 selon le même principe illustré sur les figures 3 et 8. La différence entre le mode de réalisation illustré figure 4 et le présent mode réside dans le fait que le ou les orifices 26 sont situés au-dessus des sorties de moutures 30 et sont orientés suivant un axe Z'' vertical sensiblement parallèle à l'axe X de l'arbre d'entraînement 19. La sortie de mouture 30 est dirigée suivant l'axe Y" qui ici est transversal par rapport à l'axe X de l'arbre d'entraînement et à l'axe Z'' des orifices 26. L'écoulement du flux de liquide est également opéré le long d'un passage 31' agencé entre le broyeur 18 et le dispositif de distribution 23 de liquide. De la sorte, une partie du périmètre externe des meules mobile 21' et fixe 20' est nettoyée par le liquide devenant ainsi chargé en résidus de mouture.

L'invention concerne également un procédé pour moudre et nettoyer une zone de mouture dans une machine à café telle que décrite précédemment. Préalablement aux étapes afférentes audit procédé, un utilisateur introduit du café en grain dans la trémie et met en marche la machine à café. Bien entendu, l'utilisateur remplit également le réservoir 6 de liquide avec de l'eau. Selon le procédé, le café en grain qui arrive via la trémie 7 dans la chambre de broyage 16 est entraîné depuis l'ouverture d'évacuation 9 vers l'intérieur de la chambre de broyage 16 grâce à la rotation de l'arbre d'entraînement 19.

Les grains sont broyés dans la chambre de broyage 16 pour obtenir une mouture. Cette dernière est transférée dans la chambre d'infusion 11 par gravité via la sortie d'évacuation 17 en regard de la chambre d'infusion 11. L'eau qui alimente le dispositif de distribution 23 de liquide distribue un flux d'eau, via le ou les orifices d'apport 26 de liquide, sur au moins une partie du périmètre externe des meules 20, 20', 21, 21' pour emporter les résidus de mouture qui se sont accumulés au niveau de la sortie de d'évacuation 17.

Selon encore ce procédé, l'eau emportant les résidus de mouture est utilisée pour infuser la mouture de café dans la chambre d'infusion 11.

Grâce à cet agencement et au procédé on obtient une boisson infusée à partir de grain de café fraichement moulu et une sortie de meule dépourvue de résidus de mouture telle qu'illustrée sur la figure 7.

L'invention est décrite dans ce qui précède à titre d'exemple. Il est entendu que l'homme du métier est à même de réaliser différentes variantes de réalisation de l'invention sans pour autant sortir du cadre de l'invention tel que défini par les revendications.

## Revendications

1. Dispositif (2) pour moudre et nettoyer une zone de mouture dans une machine à café (1) laquelle comporte une chambre d'infusion, le dispositif (2) étant destiné à être disposé au-dessus de la chambre d'infusion, le dispositif comprenant :
- un corps (15) comportant :
o une chambre de broyage (16) recevant des grains à moudre ; et,
o une sortie d'évacuation (17) de la mouture;
- un broyeur à meules (18) installé dans la chambre de broyage (16) pour moudre des grains ;
- un dispositif (23) de distribution de liquide distribuant un liquide vers la chambre d'infusion (11) et comprenant au moins un orifice d'apport (26) de liquide
**caractérisé en ce que** l'orifice d'apport (26) de liquide est orienté vers la sortie d'évacuation (17) en direction d'une partie au moins d'un périmètre externe du broyeur à meules (18) pour y distribuer un flux de liquide.

2. Dispositif (2) pour moudre et nettoyer selon la revendication 1, **caractérisé en ce que** l'orifice d'apport (26) de liquide est agencé sur une paroi intérieure (27) du dispositif (23) de distribution de liquide.

3. Dispositif (2) pour moudre et nettoyer selon la revendication 2, **caractérisé en ce que** la paroi intérieure (27) se prolonge sensiblement verticalement vers le bas pour définir une chambre d'évacuation de mouture, et **en ce que** l'orifice d'apport (26) de liquide est agencé pour diriger un flux de liquide vers au moins une partie de ladite paroi intérieure (27).

4. Dispositif (2) pour moudre et nettoyer selon la revendication 3, **caractérisé en ce que** le broyeur à meules (18) comporte une meule fixe (20 ; 20') et une meule mobile (21 ; 21'), la meule mobile (21 ; 21') étant entrainée en rotation par un arbre d'entraînement (19) selon un axe de rotation (X) sensiblement vertical et disposée en vis-à-vis de la meule fixe, les meules mobile et fixe étant agencées pour définir entre elles un tronçon (22) d'écoulement de la mouture.

5. Dispositif (2) pour moudre et nettoyer selon la revendication 4, **caractérisé en ce que** le dispositif (23) de distribution comprend une portion tubulaire (25) qui est disposée au moins autour d'une partie du périmètre externe des meules (20 ; 20', 21 ; 21').

6. Dispositif (2) pour moudre et nettoyer selon la revendication 2 ou 5, **caractérisé en ce que** le dispositif (23) de distribution de liquide comprend plusieurs desdits orifices d'apport (26) de liquide qui sont distribués radialement le long du périmètre de la paroi intérieure (27) .

7. Dispositif (2) pour moudre et nettoyer selon les revendications 4 et 6, **caractérisé en ce que** le tronçon d'écoulement (22) de la mouture présente une sortie de mouture (30) orientée suivant un axe (Y ; Y' ; Y'') qui est désaxé par rapport à l'axe (Z ; Z' ; Z'') que présente chaque orifice d'apport (26) de liquide.

8. Dispositif (2) pour moudre et nettoyer selon la revendication 4, **caractérisé en ce que** la meule mobile (21) est de forme conique ou tronconique et est installée à l'intérieur de la meule fixe (20).

9. Dispositif (2) pour moudre et nettoyer selon la revendication 4, **caractérisé en ce que** les meules mobile (21') et fixe (20') sont en forme de disque.

10. Dispositif (2) pour moudre et nettoyer selon la revendication 9, **caractérisé en ce que** l'orifice d'apport (26) de liquide est situé au dessus des meules (20', 21') pour permettre l'écoulement du liquide le long d'un passage (31 ; 31') agencé entre le broyeur à meules (18) et le dispositif (23) de distribution.

11. Dispositif (2) pour moudre et nettoyer selon les revendications 1 à 10, **caractérisé en ce que** les meules (20, 20', 21, 21') du broyeur à meules (18) sont en céramique.

12. Machine à café (1) comprenant:
- une trémie (7) ayant une ouverture de réception (8) de grains de café et une ouverture d'évacuation (9) des grains de café vers un dispositif (2) à moudre et nettoyer conforme à l'une des revendications 1 à 11;
- une chambre d'infusion (11) en communication avec la sortie d'évacuation (17) de la mouture de café de la chambre de broyage (16) qui reçoit la mouture et le liquide chargé en résidus de mouture, la sortie d'évacuation (17) étant agencée au-dessus de la chambre d'infusion (11);
- une unité de chauffage (5) de liquide en communication avec un réservoir (6) pour l'alimentation en liquide du dispositif (23) de distribution du liquide, et
- un moteur (14) relié à un arbre d'entrainement (19) de la meule mobile (21, 21').

13. Machine à café (1) selon la revendication 12, **caractérisée en ce que** l'arbre d'entraînement (19) n'entraîne pas la chambre d'infusion (11).

14. Procédé pour moudre et nettoyer une zone de mouture dans une machine (1) comportant un dispositif pour moudre et nettoyer selon l'une des revendications 1 à 11, **caractérisé en ce que** :
- du café en grain est broyé dans une chambre de broyage (16) pour obtenir une mouture ;
- la mouture de café est transférée dans une chambre d'infusion (11), et
- de l'eau alimentant le dispositif (23) de distribution de liquide distribue un flux d'eau sur au moins une partie du périmètre externe des meules (20 ; 20', 21 ; 21') pour emporter des résidus de mouture.

15. Procédé selon la revendication 14, **caractérisé en ce que** l'eau emportant les résidus de mouture est dirigée vers la chambre d'infusion (11) pour y infuser la mouture.

## Patentansprüche

1. Vorrichtung (2) zum Mahlen und Reinigen einer Mahlzone in einer Kaffeemaschine (1), die eine Brühkammer umfasst, wobei die Vorrichtung (2) zur Anordnung oberhalb der Brühkammer bestimmt ist und Folgendes umfasst:
- einen Körper (15) mit:
o einer Mahlkammer (16), die die zu mahlenden Kaffeebohnen aufnimmt; und
O einen Auslass (17) für das Mahlgut;
- eine in der Mahlkammer (16) installierte Scheibenmühle (18) zum Mahlen der Kaffeebohnen;
- eine Flüssigkeitsabgabevorrichtung (23), die eine Flüssigkeit in die Brühkammer (11) abgibt und zumindest eine Flüssigkeitszufuhröffnung (26) aufweist,
**dadurch gekennzeichnet, dass** die Flüssigkeitszufuhröffnung (26) auf den Auslass (17) in Richtung zumindest eines Teils eines äußeren Umfangs der Scheibenmühle (18) ausgerichtet ist, um einen Flüssigkeitsstrom darin zu verteilen.

2. Vorrichtung (2) zum Mahlen und Reinigen nach Anspruch 1, **dadurch gekennzeichnet, dass** die Flüssigkeitszufuhröffnung (26) an einer Innenwand (27) der Flüssigkeitsabgabevorrichtung (23) angeordnet ist.

3. Vorrichtung (2) zum Mahlen und Reinigen nach Anspruch 2, **dadurch gekennzeichnet, dass** sich die Innenwand (27) im Wesentlichen vertikal nach unten fortsetzt, um eine Mahlauslasskammer zu definieren, und dass die Flüssigkeitszufuhröffnung (26) angeordnet ist, um einen Flüssigkeitsstrom zu zumindest einem Teil der Innenwand (27) zu leiten.

4. Vorrichtung (2) zum Mahlen und Reinigen nach Anspruch 3, **dadurch gekennzeichnet, dass** die Scheibenmühle (18) eine fixe Mahlscheibe (20; 20') und eine mobile Mahlscheibe (21; 21') umfasst, wobei die mobile Mahlscheibe (21; 21') von einer Antriebswelle (19) entlang einer im Wesentlichen vertikalen Drehachse (X) angetrieben und gegenüber der fixen Mahlscheibe angeordnet ist, wobei die mobile und fixe Mahlscheibe gestaltet sind, um untereinander einen Abflussabschnitt (22) des Mahlguts zu bilden.

5. Vorrichtung (2) zum Mahlen und Reinigen nach Anspruch 4, **dadurch gekennzeichnet, dass** die Abgabevorrichtung (23) einen rohrförmigen Abschnitt (25) aufweist, der zumindest um einen Teil des äußeren Umfangs der Mahlscheiben (20; 20', 21; 21') angeordnet ist.

6. Vorrichtung (2) zum Mahlen und Reinigen nach Anspruch 2 oder 5, **dadurch gekennzeichnet, dass** die Flüssigkeitsabgabevorrichtung (23) mehrere Flüssigkeitszufuhröffnungen (26) umfasst, die radial entlang des Umfangs der Innenwand (27) verteilt sind.

7. Vorrichtung (2) zum Mahlen und Reinigen nach Anspruch 4 und 6, **dadurch gekennzeichnet, dass** der Abflussabschnitt (22) des Mahlguts einen Mahlgutauslass (30) aufweist, der entlang einer Achse (Y; Y'; Y'') ausgerichtet ist, die gegenüber der Achse (Z; Z'; Z'') versetzt ist, die jede Flüssigkeitszufuhröffnung (26) darstellt.

8. Vorrichtung (2) zum Mahlen und Reinigen nach Anspruch 4, **dadurch gekennzeichnet, dass** die mobile Mahlscheibe (21) konisch oder kegelstumpfförmig ausgebildet und im Innern der fixen Mahlscheibe (20) angeordnet ist.

9. Vorrichtung (2) zum Mahlen und Reinigen nach Anspruch 4, **dadurch gekennzeichnet, dass** die mobile (21') und fixe (20') Mahlscheibe scheibenförmig sind.

10. Vorrichtung (2) zum Mahlen und Reinigen nach Anspruch 9, **dadurch gekennzeichnet, dass** die Flüssigkeitszufuhröffnung (26) oberhalb der Mahlscheiben (20', 21') angeordnet ist, damit die Flüssigkeit entlang eines zwischen der Scheibenmühle (18) und der Abgabevorrichtung (23) angeordneten Durchgangs (31; 31') abfließen kann.

11. Vorrichtung (2) zum Mahlen und Reinigen nach Anspruch 1 bis 10, **dadurch gekennzeichnet, dass** die Mahlscheiben (20, 20', 21, 21') der Scheibenmühle (18) aus Keramik bestehen.

12. Kaffeemaschine (1), die Folgendes umfasst:
- einen Trichter (7) mit einer Öffnung (8) zur Aufnahme von Kaffeebohnen und einer Auslassöffnung (9) der Kaffeebohnen zu einer Vorrichtung (2) zum Mahlen und Reinigen nach einem beliebigen der vorstehenden Ansprüche 1 bis 11;
- eine Brühkammer (11) in Verbindung mit dem Auslass (17) des Kaffeemahlguts aus der Mahlkammer (16), die das Mahlgut und die mit Mahlgut beladene Flüssigkeit aufnimmt, wobei der Auslass (17) oberhalb der Brühkammer (11) angeordnet ist;
- eine Aufheizeinheit (5) für die Flüssigkeit in Verbindung mit einem Tank (6) zur Versorgung der Flüssigkeitsabgabevorrichtung (23) mit Flüssigkeit und
- einen Motor (14), der mit einer Antriebswelle (19) der mobilen Mahlscheibe (21, 21') verbunden ist.

13. Kaffeemaschine (1) nach Anspruch 12, **dadurch gekennzeichnet, dass** die Antriebswelle (19) nicht die Brühkammer (11) antreibt.

14. Verfahren zum Mahlen und Reinigen einer Mahlzone in einer Maschine (1) umfassend eine Vorrichtung zum Mahlen und Reinigen nach einem beliebigen der vorstehenden Ansprüche 1 bis 11, **dadurch gekennzeichnet, dass**:
- Kaffeebohnen in einer Mahlkammer (16) gemahlen werden, um ein Mahlgut zu erzielen;
- das Kaffeemahlgut in eine Brühkammer (11) überführt wird, und
- Wasser, das die Flüssigkeitsabgabevorrichtung (23) speist, einen Wasserstrom über zumindest einen Teil des äußeren Umfangs der Mahlscheiben (20; 20', 21; 21') verteilt, um Mahlgutrückstände auszutragen.

15. Verfahren nach Anspruch 14, **dadurch gekennzeichnet, dass** das die Mahlgutrückstände austragende Wasser zur Brühkammer (11) geleitet wird, um das Mahlgut zu brühen.

## Claims

1. A device (2) for milling and cleaning a milling zone in a coffee machine (1) which includes an infusion chamber, the device (2() being designed to be disposed above the infusion chamber, the device comprising:
- a body (15) including:
o a grinding chamber (16) receiving beans to be milled; and,
o a discharge outlet (17) for the grounds
- a millstone type grinder (18) installed in the grinding chamber (16) for milling the beans;
- a liquid distribution device (23) distributing a liquid to the infusion chamber (11) and comprising at least one liquid inflow opening (26)
**characterized in that** the liquid inflow opening (26) is oriented toward the discharge outlet (17) in the direction of a portion at least of an external perimeter of the millstone grinder (18) to distribute to it a flow of liquid.

2. The device (2) for milling and cleaning according to claim 1, **characterized in that** the liquid inflow opening (26) is arranged on an interior wall (27) of the liquid distribution device (23).

3. The device (2) for milling and cleaning according to claim 2, **characterized in that** the interior wall (27) is extended substantially vertically downward to define a ground discharge chamber, and **in that** the liquid inflow opening (26) is arranged to direct a flow of liquid toward at least a portion of said interior wall (27).

4. The device (2) for milling and cleaning according to claim 3, **characterized in that** the millstone grinder (18) includes a fixed millstone (20; 20') and a movable millstone (21; 21'), the movable millstone (21 21') being driven in rotation by a drive shaft (19) around a substantially vertical axis of rotation (X) and disposed facing the fixed millstone, the movable and fixed millstones being arranged to define between themselves a ground flow segment (22).

5. The device (2) for milling and cleaning according to claim 4, **characterized in that** the distribution device (23) comprises a tubular portion (25) which is disposed at least around a portion of the external perimeter of the millstones (20; 20', 21; 21').

6. The device (2) for milling and cleaning according to claim 2 or 5, **characterized in that** the liquid distribution device (23) comprises several of said liquid inflow openings (26) which are distributed radially along the perimeter of the interior wall (27).

7. The device (2) for milling and cleaning according to claims 4 and 6, **characterized in that** the ground flow segment (22) has a ground outlet (30) oriented along an axis (Y; Y' Y") which is off-axis with respect to the axis (Z Z' Z") that each liquid inflow opening (26) presents.

8. The device (2) for milling and cleaning according to claim 4, **characterized in that** the movable millstone (21) has a conical or frusto-conical shape and is installed in the interior of the fixed millstone (20) .

9. The device (2) for milling and cleaning according to claim 4, **characterized in that** the movable (21') and fixed (20') millstones have the shape of a disc.

10. The device (2) for milling and cleaning according to claim 9, **characterized in that** the liquid inflow opening (26) is situated above the millstones (20', 21') to allow the flow of the liquid along a passage (31; 31') arranged between the millstone type grinder (18) and the distribution device (23).

11. The device (2) for milling and cleaning according to claims 1 to 10, **characterized in that** the millstones (20, 20', 21, 21') of the millstone type grinder (18) are made of ceramic.

12. A coffee machine (1) comprising:
- a hopper (7) having a reception opening (8) for coffee beans and a discharge opening (9) for coffee beans toward a milling and cleaning device (2) conforming to one of claims 1 to 11;
- an infusion chamber (11) in communication with the coffee grounds discharge outlet (17) of the grinding chamber (16) which receives the grounds and the liquid loaded with residues of grounds, the discharge outlet (17) being arranged above the infusion chamber (11);
- a liquid heating unit (5) in communication with a reservoir (6) for supplying liquid to the liquid distribution device (23), and
- a motor (14) connected to a drive shaft (19) of the movable millstone (21, 21').

13. The coffee machine (1) according to claim 12, **characterized in that** the drive shaft (19) does not drive the infusion chamber (11).

14. A method for milling and cleaning a milling zone in a machine (1) including a device for milling and cleaning according to one of claims 1 to 11, **characterized in that**:
- coffee beans are ground in a grinding chamber (16) to obtain grounds;
- the coffee grounds are transferred into an infusion chamber (11), and
- water supplying the liquid distribution device (23) distributes a flow of water over at least a portion of the external perimeter of the grindstones (20, 20', 21, 21') to remove residues of grounds.

15. The method according to claim 14, **characterized in that** the water carrying the grounds residues is directed toward the infusion chamber (11) to infuse the grounds there.
